# EUROPEAN PATENT SPECIFICATION

(11) **EP 0 351 830 B1**
(45) Date of publication and mention of the grant of the patent: **20.03.1996**
(21) Application number: 89113270.6
(22) Date of filing: 19.07.1989
(51) Int. Cl.: C08L 67/06, C08F 299/04

(54) **Polyester compositions with improved properties**
Polyester-Zusammensetzung mit verbesserten Eigenschaften
Masses de moulage à base de polyester avec des propriétés améliorées

(30) Priority: 20.07.1988 US 221651
(43) Date of publication of application: 24.01.1990
(73) Proprietor: UNION CARBIDE CHEMICALS AND PLASTICS COMPANY INC. (a New York corporation), Danbury Connecticut 06817-0001 (US)
(72) Inventor: Reid, Carroll Glenn, Charleston West Virginia 25314 (US); Rex, Gary Charles, Cross Lanes West Virginia 25313 (US)
(74) Representative: Barz, Peter, Dr.

(56) References cited:
- EP-A- 234 692
- EP-A- 0 028 841
- EP-A- 0 031 434
- EP-A- 0 058 740
- US-A- 3 621 093
- US-A- 4 260 538
- US-A- 4 535 110

## Description

This invention relates to polyester molding compositions and more particularly to compositions having both good surface appearance and improved interlaminar shear strength.

The use of low profile additives has made a significant contribution to commercial polyester molding technology to reduce shrinkage during the curing reaction, and thereby improve dimensional stability and surface smoothness. Low profile additives are polymers such as vinyl acetate polymers, acrylic polymers, polyurethane polymers, polystyrene, butadiene styrene polymers, polycaprolactones, saturated polyester and others.

However, many times these additives alone are not adequate to produce the surface smoothness required for automotive body panel applications. Improvements are therefor needed beyond this level of performance.

In response to these increased demands the the art has seen a variety of answers:

US-A-4,525,498 teaches a low profile additive composition containing a thermosetting unsaturated polyester, a thermoplastic polymer additive to control shrinkage and an ethylenically unsaturated monomer suitable for use in molding application the improvement being incorporating into said mixture an epoxy compound having at least one 1,2 epoxy group per molecule said epoxy compound being essentially free of reactive unsaturation.

US-A-4,374,215 teaches polyester molding composition comprising:
(a) a polyester resin comprising the reaction product of an olefinically unsaturated dicarboxylic acid or anhydride and a polyol;
(b) an olefinically unsaturated monomer that is copolymerizable with said polyester resin;
(c) a thermoplastic polymer low profile additive to control shrinkage; and
(d) an effective amount of a second crosslinkable vinyl monomer having a reactivity ratio (r₁) with styrene of greater than 1. The addition of component (d) results in moldings with improved surface characteristics.

US-A-4,673,706 teaches the addition of crosslinkable vinyl monomers and epoxy compounds to low shrinking polyester molding compositions containing unsaturated polyesters results in moldings with improved surface characteristics.

EP-A- 251 067 teaches a molding composition comprising an unsaturated polyester resin, an ethylenically unsaturated monomer, copolymerizable with said polyester resin a thermoplastic low profile additive wherein the improvement consists of adding lactone monomer at 2-20 parts per hundred of the combined weight of unsaturated polyester resin, ethylenically unsaturated monomer and thermoplastic low profile additive resulting in improved surface and shrinkage control.

US-A-4,535,110 teaches the use of an isocyanate terminated urethane prepolymer composition in combination with thermoplastic low profile additives to yield improved shrinkage control.

The development of these molding materials has led to a wide acceptance by the transportation industry because of good surface appearance, dimensional stability, physical properties, assembly consolidation and potential weight savings. However, as these applications have grown even higher new standards in all regards are being developed.

A disadvantage of using the low profile additives is that they tend to reduce the physical properties of the molded laminate. This is particularly pronounced at the elevated temperatures at which the parts are formed [132-166°C (270-330°F)] under pressure. This reduction in properties can lead to an increase in defects such as cracking, delamination (blistering) and others.

Of these defects, blistering is the most severe since it almost always results in scraping of the part. Considerable attention has been given to this defect in the past. An excellent publication discussing causes of and methods to reduce blistering is "Reducing Blistering In SMC Molding" by R.M. Griffith and H. Shanoski, Plastics Design and Processing, pg. 10-12 (February 1977).

Some previous workers have incorporated diacrylates in unsaturated polyester formulations as materials to improve cure speed. These are represented by US-A-3,621,093 4,260,538. The use of this material in the US-A-3,621,093 is without low profile additive and compositions of this invention produce surface smoothness clearly inadequate for the production of high quality automotive or truck body panels.

In US-A-4,260,538 it is described that 0.01 to 0.02 parts by weight of polyacrylate be used which is totally inadequate to achieve the benefits of our invention. In addition, the preferred formulation of Example I of this patent has been molded and is inadequate in surface smoothness for the most advanced body panel requirements.

The most likely mechanism of blister formation begins with pressurization of gas within the part during molding, followed by crack initiation and extension when the press opens. The gas pressure causes the delaminated area to deform into a blister. This deformation is usually permanent although reduced in size, even when the pressure is relieved.

It is generally impractical, to mold without trapping gas. Furthermore, parts may again become pressurized when later heated either during painting or bonding operations. The pressure results from attempted expansion of air or other volatiles trapped or dissolved in the part.

Therefore, an adequate level of interlaminar strength is required in the finished moldings to prevent blister formation.

Accordingly, there exists a need to provide superior low profile unsaturated molding composition which have exceptional surface smoothness with increased physical properties, particularly interlaminar tensile shear strength at elevated temperature.

EP-A-234 692 is directed to a polymerizable composition comprising an unsaturated polyester, a styrene and/or (meth)acrylate monomer and a compound containing at least two (meth)acrylate groups and being free of urethane or hydroxy groups.

It is an object of the present invention to provide molding compositions which yield moldings having excellent surface quality.

It is further an object of the present invention to provide molding compositions which yield moldings which exhibit improved physical properties and resistance to developing defects, such as blistering.

The present invention provides polyester molding compositions comprising:
(a) a polyester resin comprising the reaction product of an olefinically unsaturated dicarboxylic acid or anhydride with a polyol, in which no more than about 30 molar percent of the unsaturated acid or anhydride can be replaced with a non-crosslinkable acid;
(b) an ethylenically unsaturated monomer that is copolymerizable with said polyester resin;
(c) a polymeric low profile additive; and
(d) a multifunctional material with an r₁ value of at least one double bond of equal to or less than 1 (one) relative to styrene comprising a molecule with two or more acrylic acid ester or methacrylic acid ester groups or two or more vinyl groups (preferably present in amounts of 1-20 parts based on a total of 100 parts of polyester resin, olefinically unsaturated monomer and low profile additive and (e) a epoxy monomer essentially free of reactive unsaturation, which is optional; and (f) a secondary crosslinking monomer with an r₁ value greater than 1 relative to styrene, which is optional;).

Additionally, the present invention provides the molding compositions containing (a) (b) (c) and (d) above in the presence of (g) an isocyanate terminated prepolymer material based either on polyether or polyester polyols. Optionally ingredients (e) and (f) may also be present.

The polyester resins (a) that can be employed in accordance with the present invention are those reaction products of an olefinically unsaturated dicarboxylic acid or anhydride such as fumaric and maleic and the like, with polyols. Non-crosslinking acids are represented by o-phthalic acid or anhydride, isophthalic acid, terephthalic acid, adipic acid, hexahydro or tetrahydrophthalic acid and "dimer" acid (dimerized fatty acids).

In addition to the above polyesters one may also use dicyclopentadiene modified unsaturated polyesters like those described in US-A-3,986,922 and 3,883,612.

A polyol is employed to produce the polyester. These include ethylene glycol, propylene glycol, butylene glycol, dipropylene glycol, diethylene glycol, neopentyl glycol, glycerin and the like.

The amount of acid or anhydride containing a non- crosslinking group shall not be greater than 30 molar percent of the total acid needed to condense in stoichometric amount with the polyol present.

Examples of ethylenically unsaturated monomers (b) are styrene and its derivative. These should preferably be used in an amount ranging from 35 to 75 weight percent based upon the total weight of polyester (a), low profile additive (c) and monomer components.

An essential component of the compositions of the invention are polymeric low profile additives (c). These can be polymers of vinyl acetate, acrylics, saturated polyesters, polyurethanes, styrene-butadiene and similarly use materials.

Suitable thermoplastic vinyl acetate polymer low profile additives are poly(vinyl acetate) homopolymers and thermoplastic copolymers containing at least 5 weight percent vinyl acetate. Such polymers include, for example, vinyl acetate homopolymer; carboxylated vinyl acetate polymers including copolymers of vinyl acetate and ethylenically unsaturated carboxylic acids, such as acrylic acid, methacrylic acid, maleic acid, fumaric acid, itaconic acid and the like or anhydrides such as maleic anhydride; vinyl acetate/vinyl chloride/ maleic acid terpolymer, and the like. Reference is made to US-A-3,718,714 and 4,284,736, and GB-A-1,361,841 for descriptions of some of the suitable vinyl acetate polymer low profile additives.

The useful vinyl acetate polymer low profile additives ordinarily have molecular weights within the range of from about 10,000 to about 250,000, and preferably from about 25,000 to about 175,000. They are usually employed in proportions of from about 5 to 25, and preferably from about 9 to 16, weight percent, based upon the total weight of polyester (a), low profile additive (c) and monomer components.

Suitable thermoplastic saturated polyester low profile additives are, in general, low molecular weight saturated polymers of polymerizable linear and/or cyclic esters and carboxylated saturated polymers and said polymerizable esters having at least one carboxyl group per molecule.

Polymers of linear and/or cyclic esters, including carboxylated polymers having an average of at least one carboxyl group per molecule which may be used in accordance with the present invention are those which possess a reduced viscosity of at least about 0.1, and preferably from about 0.15 to about 15 and higher. The preferred polymers of cyclic esters have a reduced viscosity of about 0.2 to about 10.

Thermoplastic saturated polymers of linear and/or cyclic esters are well known and the carboxylated saturated esters are well known and such thermoplastic saturated polymers, and particularly polymers prepared from epsilon caprolactones, have been advantageously employed as low profile additives. Reference, for example is made to US-A- 3,549,586 and 3,668178 for descriptions of thermoplastic saturated polyester low profile additives and carboxylated thermoplastic saturated polyester low profile additives prepared from cyclic esters.

Other thermoplastic saturated polyesters which are useful as low profile additives are those based on condensation products of, primarily, dicarboxylic acids and organic diols. Some examples of such diacids are adipic acid, isophthalic acid terephthalic acid and the like and such glycols could be ethylene glycol, diethylene glycol, neopentyl glycol and the like.

The low profile additives (c) may usually be employed in the compositions of the invention in proportions from about 5 to 25 weight percent, and preferably from about 10 to 20 weight percent, based upon the total weight of polyester (a), low profile additives (c) and monomer components.

Also suitable in certain aspects of the invention are thermoplastic polyalkyl acrylate or methacrylate low profile additives including, for example, homopolymers of methyl methacrylate, ethyl methacrylate, butyl methacrylate, methyl acrylate, ethyl acrylate; copolymers of methyl methacrylate and lower alkyl esters of acrylic and methacrylic acids, and copolymers of methyl methacrylate with minor amounts of one or more of the following: lauroyl methacrylate, isobornyl methacrylate, acrylamide, hydroxyethyl methacrylate, styrene, 2-ethylhexyl acrylate, acrylonitrile, methacrylic acid, polystyrene, styrene copolymers, such as styrene/butadiene copolymers, cellulose acetate butyrate, alkylene oxide polymers, urethane polymers, and the like.

The molecular weight of the alkyl acrylate or methacrylate polymers useful in the invention may vary over a wide range, from 10,000 to 1,000,000 and preferably from 25,000 to 500,000.

This class of low profile additives should be present in amounts ranging from 1 to 25 percent by weight, based upon the total weight of polyester (a), low profile additive(c), and monomer components, and preferably from 5 to 20 percent by weight.

Urethane polymers which can be employed in this invention, alone or as mixtures with other low profile additives, are broadly structured and some examples can be found in such references as US-A-4,035,439; EP-A-74746; and US-A-4,421,894.

The advanced low profile additive systems required for the exceptional surface smoothness demanded of new applications require the combination of the above low profile additives with new materials for the best performance. The materials are (1) 1,2-epoxy based monomers with at least one epoxy per molecule and essentially free of reactive unsaturation and/or (2) a secondary crosslinking monomer with an r₁ greater than one relative to styrene. A few examples of the epoxy monomer (e) are derivatives of octyl tallate, the diglycidyl ether of Bisphenol-A, various cycloaliphatic diepoxides, epoxidize soybean oil and the like. The secondary monomers (f) are represented by vinyl esters of carboxylic acids, e.g. vinyl acetate, diallylphthalate, vinyl alkyl ethers and the like. A complete description of this approach is given in US-A-4,525,498; 4,374,215; 4,673,706 and EP-A-251 067. These should preferably be used in an amount ranging from about 1 to about 15 weight percent based upon the total weight of the polyester (a), monomer components and the low profile additive (c).

The above materials (d) are described by materials such as diacrylate and methacrylate esters of a variety of diols such as 1,6 hexane diol, neopentyl glycol, butylene glycol, diethylene glycol, tetra ethylene glycol, tripropylene glycol, polyethylene glycol and the like, ethoxylated Bisphenol A diacrylate and dimethacrylate and also the reaction product of either acrylic acid or methacrylic acid with the diglycidyl ether of Bisphenol-A and higher molecular weight versions as illustrated below. 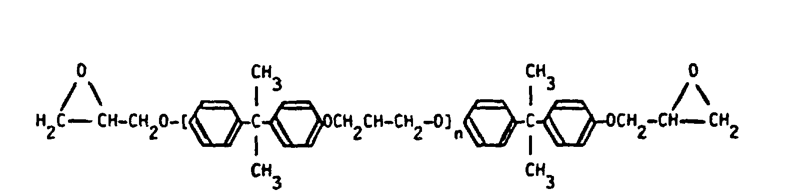 Wherein n is greater than 0.2.

Many such structures are available commercially as vinyl ester resins.

Greater functionality materials are represented by, but not limited to, trimethylolpropane trimethacrylate or acrylate, pentaerythritol tetra acrylate or methacrylate, dipentaerythritol penta acrylate or methacrylate, ethoxylated trimethylol propane triacrylate and the like. Also multifunctional acrylates and methacrylates containing urethane linkages are useful.

Other types of materials (d) can also be useful as represented by divinyl benzene and various alkyl or aryl substitutions of this material. Similar materials are those containing two or more vinyl groups regardless of the molecular weight of the molecule. These materials are preferably used in an amount ranging from about 1 to about 20 weight percent based on the total weight of the polyester, monomer and low profile additive components.

An optional component of the compositions of the invention is a viscosity reducing agent having at least 6 carbon atoms. Suitable viscosity reducing agents are the aliphatic monocarboxylic acids. Frequently these materials are saturated or unsaturated fatty acids having from 6 to 24 or more carbon atoms in the chain. Such carboxylic acids may be caproic (hexanoic), caprylic (octanoic), capric (C₁₀), lauric (C₁₄), palmitic (C₁₆), palmitoleic (C₁₈), stearic (C₁₈), oleic (C₁₈), linoleic (C₁₈), and the like acids, and the acids may be either straight chain or branched chain. Products in which mixtures of acids of the foregoing kind occur, such as tall oil acid, may be used.

The viscosity reducing agent can be present in amounts ranging from 0.4 to about 6 weight percent, and preferably from about 1 to 4 weight percent, based on the combined weight of thermosetting resin (a), copolymerizable monomer and low profile additive (c).

When desired a thickening agent can also be employed in the compositions of the invention. Such materials are known in the art, and include the oxides and hydroxides of the metals of Group I, II and III of the Periodic Table. Illustrative examples of thickening agents include magnesium oxide, calcium oxide, calcium hydroxide, zinc oxide, barium oxide, magnesium hydroxide, and the like, including mixtures of the same. Thickening agents are normally employed in proportions of from about 0.1 to about 6 weight percent, based upon the weight of polyester resin (a), plus monomer, plus low profile additive (c).

Alternatively, a dual thickening system may be employed wherein, for example, a metallic oxide or hydroxide and polyisocyanate in amounts of polyisocyanate sufficient to react with at least thirty percent of the hydroxyl groups but not more than one hundred and five percent of the hydroxyl groups present and an amount of metallic oxide or hydroxide sufficient to react with at least thirty percent of the carboxyl groups but not more than seventy-five percent of the carboxyl groups present. Reference is made to BE-A-849,135 for a description of such dual thickening systems.

The polyester molding compositions may also contain one or more of the known types of conventional additives, which are employed for their known purposes in the usual amounts. The following are illustrative of such additives:
(1) Polymerization initiators such as t-butyl hydroperoxide, t-butyl perbenzoate,benzoyl peroxide, cumene hydroperoxide, methyl ethyl ketone peroxide, and others known to the art. The polymerization initiator is employed in a catalytically effective amount, such as from about 0.3 to about 2 to 3 weight percent, based on the weight of the polyester plus monomer plus low profile additive;
(2) Fillers such as clay, hydrated alumina, silica, calcium carbonate and others known to the art;
(3) Reinforcing fillers such as glass fibers or fabrics, various organic fibers or fabrics such as those made of polypropylene, acrylonitrile/ vinyl chloride copolymer, and others known to the art;
(4) Mold release agents or lubricants, such as zinc stearate, calcium stearate, and others known to the art; and
(5) Rubbers of elastomers such as: (a) homopolymers or copolymers of conjugated dieneshaving a weight average molecular weight of 30,000 to 400,000 or higher as described in US-A-4,020,036. The conjugated dienes contain 4-12 carbon atoms per molecule such as 1,3-butadiene, isoprene, and the like; (b) epihalohydrin homopolymers, a copolymer of two or more epihalohydrin monomer(s), or a copolymer of an epihalohydrin monomer(s) with an oxide monomer(s) having a number average molecular weight (Mn) which varies from about 900 to about 50,000 as described in US-A-4,101,604; and(c) chloroprene polymers including homopolymers of chloroprene and copolymers of chloroprene with sulfur and/or with at least one copolymerizable organic monomer wherein chloroprene constitutes at least 50 weight percent of the orgnaic monomer make-up of the copolymer as described in US-A-4,161,471; (d) hydrocarbon polymers including ethylene/propylene copolymers and copolymers of ethylene/propylene and at least one nonconjugated diene, such as ethylene/ propylene/hexadiene terpolymers and ethylene/ propylene/1,4-hexadiene/norbornadiene, as described in US-A-4,161,471; (e) conjugated diene butyl elastomers, such as copolymers consisting of from 85 to 99.5% by weight of a C₄-C₇ isolefin combined with 15 to 0.5% by weight of a conjugated multi-olefin having 4 to 14 carbon atoms, copolymers of isobutylene and isoprene where a major portion of the isoprene units combined therein have conjugated diene unsaturation as described in US-A-4,160,759.

Whereas the exact scope of the instant invention is set forth in the appended claims, the following specific examples illustrate certain aspects of the present invention and, more particularly, point out methods of evaluating the same. However, the examples are set forth for illustration only and are not to be construed as limitations on the present invention except as set forth in the appended claims. All parts and percentages are by weight unless otherwise specified.

### DEFINITIONS

Component A - a highly reactive unsaturated polyester resin sold by Freeman chemical Co. for automotive body panel molding applications.
Component B - A copolymer of acrylic acid with vinyl acetate (0.89/99.2 by weight) dissolved to 40% in styrene.
Component C - an epoxidized octyl tallate sold by Union Carbide under the designation Flexol™ EP-8.
Component D - a five percent solution of para-benzoquinone in diallylphthalate.
Component E - A 33 weight percent solids solution of a poly(vinyl acetate) homopolymer dissolved in styrene monomer.
Component F - a viscosity reducer supplied by Byk Chemie and sold under the designation BYKW990.
Component G - a calcium carbonate filler supplied by Georgia Marble and sold under the designation CalWhite II^{™}.
TBPB - t-butylperbenzoate peroxide catalyst.
PDO - 50% t-butyl peroctoate peroxide catalyst.

### General Procedures for Preparation of Sheet Moldinq Compound (SMC) Formulations

All the liquid components were weighed individually into a 20ℓ (5 gallon) open top container placed on a Toledo balance. The contents of the container were the mixed (in a hood) with a high speed Cowles type dissolver. The agitator was started at a slow speed, then increased to medium speed to completely mix the liquids over a period of 2-3 minutes. The mold release agent and/or fatty acid was next added to the liquids from an ice cream carton and mixed until completely dispersed. The filler was next added gradually from a tared container until a consistent paste was obtained and the contents were then further mixed to a minimum temperature of 32°C (90°F). The thickener was next mixed into the paste over a period of 2-3 minutes, the mixer was stopped and 175 grams of the paste was removed from the container and transferred to a wide-mounted 120ml (4 oz.) bottle. The paste sample was stored in the capped bottle at room temperature and the viscosity measured periodically using a Model HBT 5X Brookfield Synchro-Lectric^{®} Viscometer on a Helipath^{®} stand.

The balance of the paste is next added to the doctor boxes on the sheet molding compound (SMC) machine where it is further combined with fiber glass [2.5 cm (1"fibers)]. The sheet molding compound is then allowed to mature to molding viscosity and then molded into the desired article.

### Method of Shrinkage Measurement

A 45.7 cm x 45.7 cm x 3.18 mm (18 inch x 18 inch x 0.125 inch) flat panel is molded in a highly polished chrome plated matched metal die mold in a 200 ton press. The exact dimensions of the four sides of this mold are measured to the ten-thousandths of a cm at room temperature. The exact length of the four sides of the flat molded panel is also determined to the ten thousandths of a cm. These measurements are substituted into the equation below:
(a-b)/a= cm/cm shrinkage cm/cm shrinkage X 1000 = 1/1000 cm/cm shrinkage.
   a=the sum of the lengths of the four sides of the mold.
   b=the sum of the lengths of the four sides of the molded panel.

A positive (+) number recorded indicates an expansion of the molded part as measured at room temperature compared to the dimensions of the mold measured at room temperature. A negative (-) number indicates shrinkage by the same comparison. The larger the positive number, the better the performance.

Surface smoothness and gloss evaluations were done visually with the aid of a light box fitted with straight lines of 2.54 cm by 2.54 cm (one inch by one inch) squares. The "trueness" of the reflection of these lines from the molded panel was a judgement of surface smoothness. Longterm waviness is a judgement of the overall straightness of single lines across the entire panel while shortterm waviness is a judgement of the sharpness (width).

### Molding

Flat panels 45.7cm x 45.7 cm (18 inches X 18 inches) of varying thickness were molded using an extremely smooth, highly polished matched metal die set of chrome plated molds. Both platens are oil heated separately to allow for varying temperature. The molding was conducted in a 200 ton press and the panel removed with the aid of ejector pins. a standard molding temperature is 149-152°C (300-305°F) at pressures of 3.45 to 6.9 MPa (500 to 1000 psi). Laminate thicknesses are typically 2.54 and 3.18 mm (0.10 and 0.125 inches).

### Interlaminar Shear Test

### Scope

This test is to measure the interlaminar strength of a molded fiberglass specimen by perpendicular tensile forces. The test is restricted to flat or nearly flat sections of the molding.

Equipment used in the test are set forth immediately below.
(1) Instron tensile testing machine; 4,530 kg (10,000 pound) cell. Universal Testing Machine Jaws.
(2) Instron oven with temperature control for 149°C (300°F).
(3) Metal mounts for bonding to specimens with diameters at bonding area of 4.04 cm (1.59 inches) [12.9 cm (2 square inch area)]. Two (2) mounts required per specimen, each pair numbered. Mounts threaded for attachment to Universal Testing Machine Jaws.
(4) Alignment fixture for holding metal mounts and specimen during oven curing of the bond.

Bonding Adhesive used in this test was Hysol^{®} Adhesive EA 934, purchased from Hysol Adhesive EA 934, Wolcott Park Inc., 999 East Ridge Rd., Rochester, NY 14621.

Flat plaques were molded from standard type SMC's (resin, filler, fiberglass, in normal amounts). Standard mold temperature of 143/149°C (290/300°F) and molding pressure of 6.9 ± 1.4 MPa(1000 ± 200 psi). Plaque thickness to be normal 2.54 mm (0.100").

### B. Flat Production Parts

Any 4.76 cm (1 7/8") square area of a nearly flat part may be tested. Each test should consist of (3) specimens from the same general area.

### Procedure

### A. Specimen Preparation

(1) cut (3) specimens approximately 4.76 cm (1 7/8") square from flat area of test specimen, at least 7.6 cm (3")away from any visible defects such as blisters, molded in flash, non-fills, etc.; and 2.5 cm (1") from external edge of part (if possible).
(2) Lightly sand (240 grit) both bonding surfaces of specimen and wipe clean with alcohol.
(3) Mix small amount of (2) component bonding adhesive together (ten specimens require approximately 33 grams).
(4) Apply 0.51-1.02 mm (20-40 mil) film of adhesive on opposing faces of metal mounts.
(5) Hand squeeze the FRP specimen between the two metal mounts to insure good contact.
(6) Place the specimen with mounts into the alignment fixture. Observe alignment to be sure sufficient FRP is overhanging all edges of the amount.
(7) After all the specimens are in the alignment fixture, place into preheated oven.
(8) Cure bonding adhesive for 30 minutes at 93° (200°F).
(9) Sand or grind off the excess edges of the FRP square to the diameter of the metal mounts.

### B. Testing

(1) Preheat Instron over (with all specimens inside) for 2 hours at 149°C (300°F).
(2) Each specimen is tensile pulled in the oven at 149°C (300°F) at a cross-head speed of 1.27 mm (0.05 inches)per minute.
(3) Record the failure load [kg(pounds)].
(4) Determine the interlaminar strength [MPa(psi)] by dividing the failure load by 12.9 cm (2 square inches).
(5) Report interlaminar strength as the average of the specimens tested for subject area.

### Examples 1-6

The formulations below were prepared in sheet molding compound (SMC) and molded into flat panels at both 30.5 cm x 30.5 cm (12 inches x 12 inches) and 45.7 cm x 45.7 cm (18 inches X 18 inches) at 3.28 mm (0.125 inches) and 2.54 mm (0.100 inches) thickness. Conditions were 152° to 146°C (305° to 295°F) at 6.9 MPa (1000 psi) pressure and 90 seconds cure time. Results are given in Tables I and II.

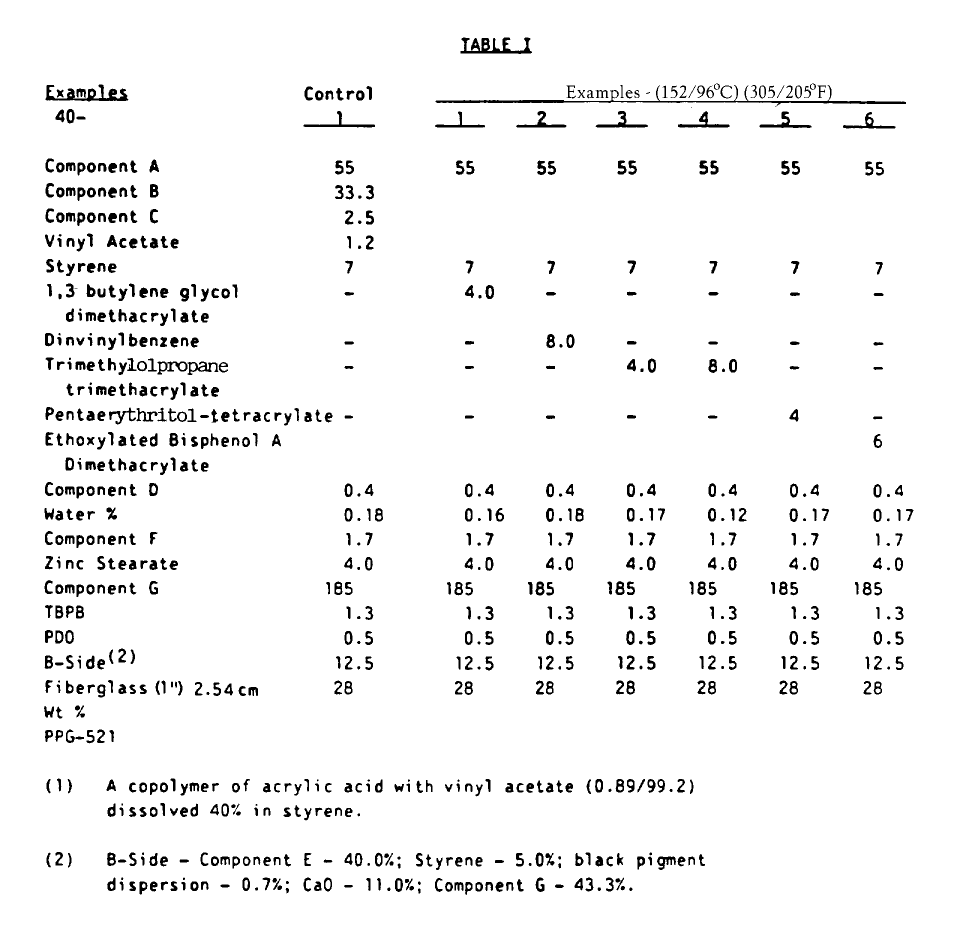

**TABLE II**

| | | Properties Measured Laminates at 149°C (300°F) | | |
|---|---|---|---|---|
| Example | Multifunctional Monomer | Flexural Strength, MPa | Flexural Modulus MPa | Interlaminar Shear, MPa (psi) |
| Control | None | 140.6 | 7440 | 3.38 (491) |
| 1 | 1,3 Butylene glycol dimethacrylate | 151.5 | 7118 | 4.67 (678) |
| 2 | Divinylbenzene | 115 | 5727 | 5.42 (787) |
| 3 | Trimethylolpropane Trimethacrylate | 144.8 | 7785 | 4.84 (703) |
| 4 | Trimethylolpropane Trimethacrylate | 139.1 | 6866 | 5.11 (743) |
| 5 | Pentaerythritol'tetra acrylate | 138.3 | 6762 | 5.08 (738) |
| 6 | Ethoxylated Bisphenol A Dimethacrylate | 177.1 | 9764 | 4.84 (703) |

From the above formulations molded panels were produced at 152° to 146°C (305° to 295°F) at 6.9 MPa (1000 psi) and 90 seconds cure into 45.7 cm x 45.7 cm x 3.18 mm (18 inch x 18 inch x 0.125 inch) flat panels using a 50% charge coverage and a 37% coverage on the mold. The number of blisters observed on two panels molded under these stressed conditions are shown below.

| Example | Multifunction Monomer | Number of Blisters |
|---|---|---|
| Control | None | 5 |
| 2 | Divinyl Benzene | 1 |
| 3 | Trimethylol propane Trimethacrylate | 1 |
| 6 | Ethoxylated Bisphenol A Dimethacrylate | 0 |

Formulations comparable to the control except containing no epoxy or secondary crosslinking monomer were prepared and molded on a truck fender at 50% charge coverage. The control exhibited relatively poor flow properties with obvious flow lines and non-homogeneous appearance. Example 4 had no obvious flow line and a more uniform, homogeneous, smooth surface appearance. Physical properties of the material produced in Example 4 were also superior to the control.

Physical properties on some of the above formulations were run at temperatures below 149°C (300°F).

| | | 80°C | | 25°C | | |
|---|---|---|---|---|---|---|
| Experiment | Multifunction Monomer | Flexural Strength, MPa (psi) | Flexural Modulus, kPa-X10⁶ (psi-X10⁶) | Flexrual Strength, MPa (psi) | Flexural Modulus, kPa-X10⁶ psi-X10⁶ | % Drop |
| Control | None | 71.56 (10,386) | 5.20 (0.754) | 136.8 (19,848) | 9.18 (1.333) | 48.4 |
| 4 | Trimethylol propane trimethacrylate | 101.6 (14,754) | 6.76 (0.981) | 142.2 (20,641) | 10.1 (1.46) | 29 |
| 6 | Ethoxylated Bisphenol A dimethacrylate | -- | -- | 151.5 (21,986) | 9.74 (1.413) | -- |

### Example 7

SMC formulations containing an isocyanate terminated prepolymer were prepared and molded on a commercial automotive hood mold at 160°C (320°F) for 60 seconds using a charge coverage of 50 percent of the mold. In one formulation a level of 5.8 percent based on the weight of unsaturated polyester resin, low profile additive and styrene,of trimethylol propane trimethacrylate was introduced while another formulation contained none of this material. All other ingredients were identical including Component B as the low profile additive. The isocyanate terminated prepolymer was based on a 2000 molecular weight polypropylene oxide base diol and 4,4' diphenylmethane diisocyanate (MDI) at a 2:1 molar ratio of MDI to polyol used at a level of about 7 percent based on the unsaturated polyester resin, low profile additive and styrene. Magnesium hydroxide at 1.9 percent based on the same ingredients was used as the co-thickening agent. Glass fiber contents were approximately 28 weight percent.

The formulation without the trimethylol propane trimethacrylate produced hoods which contained numerous (5-15) blisters and were not suitable for use. The formulation containing the trimethylol propane trimethacrylate gave no blisters and had excellent surface smoothness. These parts were suitable for commercial use.

## Claims

1. A resin composition suitable for molding comprising (a) a polyester resin comprising the reaction product of an olefinically unsaturated dicarboxylic acid or anhydride with a polyol, in which no more than 30 molar percent of the unsaturated acid or anhydride can be replaced with a non-crosslinkable acid; (b) an ethylenically unsaturated monomer; (c) a polymeric low profile additive and (d) a multifunctional material with an r₁ value relative to styrene of at least one double bond of equal to or less than 1 comprising a molecule with two or more acrylic acid ester or methacrylic acid ester groups or two or more vinyl groups.

2. The resin composition of claim 1, additionally comprising (e) an epoxy monomer free of reactive unsaturation and/or (f) a secondary crosslinkable monomer with an r₁ value relative to styrene of greater than 1.

3. The resin composition of claim 2 wherein the polyester resin has no more than 30 mol % of its acid moieties being unreactive with (b) and wherein the ethylenically unsaturated monomer (b) is present in an amount ranging from 35 to 75 weight percent based on the total weight of the resin composition, and wherein the polymeric low profile additive (c) is present in an amount ranging from 5 to 25 weight percent of the total weight of the resin composition and wherein the epoxy monomer (e) and the secondary crosslinkable monomer (f) are present in an amount ranging from 1 to 15 weight percent based on the total weight of the resin composition, and wherein the material (d) is present in an amount ranging from 1 to 20 weight percent based on the total weight of the resin compsition.

4. The composition as in one or more of the claims 1 to 3 wherein the material (d) consists of a molecule with two or more acrylic acid ester or methacrylic acid ester groups.

5. The composition as in one or more of the claims 1 to 4 wherein the material (d) contains two or more vinyl groups.

6. The composition as in one or more of the claims 1 to 5 wherein the material (d) is ethoxylated Bisphenol-A diacrylate or dimethacrylate, a vinyl ester resin, either the triacrylic or trimethacrylic ester of trimethylolpropane, the diacrylate or dimethacrylate of butylene glycol, divinyl benzene or a polymer containing two or more vinyl groups per molecule.

7. The composition as in one or more of the claims 1 to 6 wherein the polymeric low profile additive (c) is based on a poly(vinyl acetate) or is a polyurethane, an acrylic polymer, a saturated polyester or a polycaprolactone.

8. The composition as in one or more of the claims 1 to 7 wherein a filler or fiber reinforcement is employed.

9. The composition as in one or more of the claims 1 to 7 combined with a filler, a thickening agent and a fiber reinforcement.

10. The composition as in one or more of the claims 1 to 9 wherein the epoxy monomer (e) is selected from cycloaliphatic epoxides, epoxidized oils and epoxidized esters.

11. The composition as in one or more of the claims 1 to 10 wherein the secondary crosslinkable monomer (f) is vinyl acetate or a vinyl ester of a carboxylic acid.

12. The resin composition of claim 1 or claim 2 additionally comprising (g) an isocyanate terminated prepolymer.

13. The composition of claim 12 wherein the polymeric low profile additive (c) is a poly(vinyl acetate), an acrylic polymer or a copolymer of vinyl acetate and acrylic acid.

14. A molded article obtained from a composition of one or more of the claims 1 to 13.

## Patentansprüche

1. Für die Formgebung geeignete Harz-Zusammensetzung, umfassend (a) ein Polyester-Harz, das umfaßt das Reaktionsprodukt einer olefinisch ungesättigten Carbonsäure oder eines Anhydrids davon mit einem Polyol, worin nicht mehr als 30 Molprozent der ungesättigten Säure oder des ungesättigten Anhydrids durch eine nicht-vernetzbare Säure ersetzt sein können; (b) ein ethylenisch ungesättigtes Monomer; (c) ein polymeres Maßstabilitäts-Additiv und (d) ein multifunktionelles Material mit einem r₁-Wert bezüglich Styrol von mindestens einer Doppelbindung von gleich oder weniger als 1, umfassend ein Molekül mit zwei oder mehr Acrylsäureester- oder Methacrylsäureester-gruppen oder zwei oder mehr Vinylgruppen.

2. Harz-Zusammensetzung nach Anspruch 1, zusätzlich umfassend (e) ein Epoxy-Monomer, das frei von reaktiver Nichtsättigung ist, und/oder (f) ein sekundäres vernetzbares Monomer mit einem r₁-Wert bezüglich Styrol von größer als 1.

3. Harz-Zusammensetzung nach Anspruch 2, in welcher das Polyester-Harz nicht mehr als 30 Mol-% seiner Säure-Einheiten, die mit (b) nicht reaktiv sind, aufweist und in welcher das ethylenisch ungesättigte Monomer (b) in einer Menge im Bereich von 35 bis 75 Gewichtsprozent, bezogen auf das Gesamtgewicht der Harz-Zusammensetzung, anwesend ist und in welcher das polymere Maßstabilitäts-Additiv (c) in einer Menge im Bereich von 5 bis 25 Gewichtsprozent des Gesamtgewichts der Harz-Zusammensetzung anwesend ist und in welcher das Epoxy-Monomer (e) und das sekundäre vernetzbare Monomer (f) in einer Menge im Bereich von 1 bis 15 Gewichtsprozent, bezogen auf das Gesamtgewicht der Harz-Zusammensetzung, anwesend sind und in welcher das Material (d) in einer Menge im Bereich von 1 bis 20 Gewichtsprozent, bezogen auf das Gesamtgewicht der Harz-Zusammensetzung, anwesend ist.

4. Zusammensetzung nach einem oder mehreren der Ansprüche 1 bis 3, in welchem das Material (d) aus einem Molekül mit zwei oder mehr Acrylsäureester- oder Methacrylsäureestergruppen besteht.

5. Zusammensetzung nach einem oder mehreren der Ansprüche 1 bis 4, in welchem das Material (d) zwei oder mehr Vinylgruppen enthält.

6. Zusammensetzung nach einem oder mehreren der Ansprüche 1 bis 5, in welchem das Material (d) ethoxyliertes Bisphenol-A-Diacrylat oder -Dimethacrylat, ein Vinylester-Harz, entweder der Triacryl- oder Trimethacrylsäureester von Trimethylolpropan, das Diacrylat oder Dimethacrylat von Butylenglycol, Divinylbenzol oder ein Polymer, das zwei oder mehr Vinylgruppen pro Molekül enthält, ist.

7. Zusammensetzung nach einem oder mehreren der Ansprüche 1 bis 6, in welcher das polymere Maßstabilitäts-Additiv (c) auf einem Poly(vinylacetat) basiert oder ein Polyurethan, ein acrylisches Polymer, ein gesättigter Polyester oder ein Polycaprolacton ist.

8. Zusammensetzung nach einem oder mehreren der Ansprüche 1 bis 7, in welcher ein Füllstoff oder eine Faserverstärkung eingesetzt wird.

9. Zusammensetzung nach einem oder mehreren der Ansprüche 1 bis 7 in Kombination mit einem Füllstoff, einem Verdickungsmittel und einer Faser-verstärkung.

10. Zusammensetzung nach einem oder mehreren der Ansprüche 1 bis 9, in welcher das Epoxy-Monomer (e) aus cycloaliphatischen Epoxiden, epoxidierten Ölen und epoxidierten Estern ausgewählt ist.

11. Zusammensetzung nach einem oder mehreren der Ansprüche 1 bis 10, in welcher das sekundäre vernetzbare Monomer (f) Vinylacetat oder ein Vinylester einer Carbonsäure ist.

12. Harz-Zusammensetzung nach Anspruch 1 oder Anspruch 2, zusätzlich umfassend (g) ein Prepolymer mit Isocyanat-Endgruppe.

13. Zusammensetzung nach Anspruch 12, in welcher das polymere Maßstabilitäts-Additiv (c) ein Poly(vinylacetat), ein acrylisches Polymer oder ein vinylacetat-Acrylsäure-Copolymer ist.

14. Geformter Gegenstand, erhalten aus einer Zusammensetzung nach einem oder mehreren der Ansprüche 1 bis 13.

## Revendications

1. Composition de résine convenant pour le moulage, comprenant (a) une résine de polyester comprenant le produit de réaction d'un acide ou anhydride d'acide dicarboxylique à non-saturation oléfinique avec un polyol, dans lequel pas plus de 30 % en moles de l'acide ou de l'anhydride non saturé ne peuvent être remplacés par un acide non réticulable ; (b) un monomère à non-saturation éthylénique ; (c) un additif polymérique à profil bas et (d) une matière multifonctionnelle, avec une valeur r₁ par rapport au styrène, d'au moins une double liaison, égale ou inférieure à 1, comprenant une molécule portant deux ou plus de deux groupes ester d'acide acrylique ou groupes ester d'acide méthacrylique ou deux ou plus de deux groupes vinyle.

2. Composition de résine suivant la revendication 1, comprenant en outre (e) un monomère époxy dépourvu de non-saturation réactive et/ou (f) un monomère réticulable secondaire avec une valeur r₁ par rapport au styrène supérieure à 1.

3. Composition de résine suivant la revendication 2, dans laquelle pas plus de 30 moles % des groupements acides de la résine de polyester ne sont inertes vis-à-vis de (b) et dans laquelle le monomère à non-saturation éthylénique (b) est présent en une quantité allant de 35 à 75 % en poids sur la base du poids total de la composition de résine, et dans laquelle l'additif polymérique (c) à profil bas est présent en une quantité allant de 5 à 25 % en poids par rapport au poids total de la composition de résine, et le monomère époxy (e) et le monomère secondaire réticulable (f) sont présents en une quantité allant de 1 à 15 % en poids sur la base du poids total de la composition de résine, et dans laquelle la matière (d) est présente en une quantité allant de 1 à 20 % en poids sur la base du poids total de la composition de résine.

4. Composition suivant une ou plusieurs des revendications 1 à 3, dans laquelle la matière (d) consiste en une molécule portant deux ou plus de deux groupes ester d'acide acrylique ou ester d'acide méthacrylique.

5. Composition suivant une ou plusieurs des revendications 1 à 4, dans laquelle la matière (d) contient deux ou plus de deux groupes vinyle.

6. Composition suivant une ou plusieurs des revendications 1 à 5, dans laquelle la matière (d) est un diacrylate ou diméthacrylate de bisphénol A éthoxylé, une résine d'ester de vinyle, l'ester triacrylique ou triméthacrylique du triméthylolpropane, le diacrylate ou le diméthacrylate du butylèneglycol, le divinylbenzène ou un polymère contenant deux ou plus de deux groupes vinyle par molécule.

7. Composition suivant une ou plusieurs des revendications 1 à 6, dans laquelle l'additif polymérique (c) à profil bas est à base de poly(acétate de vinyle) ou est un polyuréthanne, un polymère acrylique, un polyester saturé ou une polycaprolactone.

8. Composition suivant une ou plusieurs des revendications 1 à 7, dans laquelle une charge ou une armature de fibre est utilisée.

9. Composition suivant une ou plusieurs des revendications 1 à 7, associée à une charge, à un agent épaississant et à une armature de fibre.

10. Composition suivant une ou plusieurs des revendications 1 à 9, dans laquelle le monomère époxy (e) est choisi entre des époxydes cycloaliphatiques, des huiles époxydées et des esters époxydés.

11. Composition suivant une ou plusieurs des revendications 1 à 10, dans laquelle le monomère réticulable secondaire (f) est l'acétate de vinyle ou un ester de vinyle d'un acide carboxylique.

12. Composition de résine suivant la revendication 1 ou la revendication 2, comprenant en outre (g) un prépolymère à terminaison isocyanate.

13. Composition suivant la revendication 12, dans laquelle l'additif polymérique (c) à profil bas est un poly(acétate de vinyle), un polymère acrylique ou un copolymère d'acétate de vinyle et d'acide acrylique.

14. Article moulé obtenu à partir d'une composition suivant une ou plusieurs des revendications 1 à 13.
